# EUROPÄISCHE PATENTSCHRIFT

(11) **EP 2 407 358 B1**
(45) Veröffentlichungstag und Bekanntmachung des Hinweises auf die Patenterteilung: **09.05.2018**
(21) Anmeldenummer: 11002524.4
(22) Anmeldetag: 26.03.2011
(51) Int. Cl.: B60T 7/22

(54) **Verfahren zur Ausführung eines Notbremsvorgangs eines Fahrzeugs**
Method for executing an emergency brake procedure on a vehicle
Procédé destiné à réaliser le déroulement d'un freinage d'urgence d'un véhicule

(30) Priorität: 17.07.2010 DE 102010027449
(43) Veröffentlichungstag der Anmeldung: 18.01.2012
(73) Patentinhaber: MAN Truck & Bus AG, 80995 München (DE)
(72) Erfinder: Hölting, Christoph, 81669 München (DE); Pongratz, Michael, 85414 Kirchdorf (DE); Heim, Volker, 81241 München (DE)
(74) Vertreter: Liebl, Thomas

(56) Entgegenhaltungen:
- EP-A1- 2 036 791
- EP-A2- 2 287 059
- DE-A1- 10 237 714
- DE-A1- 19 926 744
- DE-A1-102005 054 754

## Beschreibung

Die Erfindung betrifft ein Verfahren zur Ausführung eines Notbremsvorgangs eines Fahrzeugs gemäß dem Oberbegriff des Patentanspruchs 1.
Notbremssysteme in Fahrzeugen sind allgemein bekannt, wobei generell zwischen Unfallvermeidungssystemen und Unfallfolgenverminderungs-systemen unterschieden wird. Unfallvermeidungssysteme erkennen Gefahrensituationen rechtzeitig und verhindern unter Idealbedingungen den Auffahrunfall. Unfallfolgenverminderungssysteme erkennen eine Gefahrensituation ebenfalls, leiten eine Notbremsung aber erst später ein. Auf diese Weise wird lediglich ein Teil der Aufprallenergie dem Fahrzeug entzogen.
Für gewöhnlich wird zu Beginn des Notbremsvorgangs bei Erfassen einer Warnbedingung eine Fahrerwarnung ausgelöst, um den Fahrer auf die drohende Gefahr aufmerksam zu machen. Die Warnbedingung kann beispielsweise aus der Geschwindigkeit und Verzögerung des Notbremsfahrzeugs, sowie dem Abstand zum vorausfahrenden Fahrzeug, dessen Geschwindigkeit und Beschleunigung ermittelt werden. Im Anschluss an die Fahrerwarnung werden vom Notbremssystem selbsttätig bestimmte Verzögerungen ermittelt bzw. angefordert).
Die DE 102 58 617 B4 beschreibt ein solches Verfahren zur Auslösung eines selbsttätigen Notbremsvorgangs eines Fahrzeugs zur Vermeidung eines Auffahrens des Fahrzeugs auf ein vorausfahrendes Fahrzeug bzw. zur Verminderung der Auffahrfolgen. Bei diesem Verfahren wird eine Fahrerwarnung ausgelöst, wenn zumindest eine vorgegebene Warnbedingung erfüllt ist. Unter Berücksichtigung der ermittelten Beschleunigung des Fahrzeugs und/oder der ermittelten Relativbeschleunigung zwischen Fahrzeug und vorausfahrenden Fahrzeug wird bei erfüllter Warnbedingung der Notbremsvorgang selbsttätig ausgelöst, um einen Unfall zu vermeiden bzw. um Unfallfolgen zu vermindern.

Aus der DE 102 37 714 A1 ist ein Verfahren zur automatischen Einleitung eines Notbremsvorgangs mit vorausgehender Warnbremsung bei Kraftfahrzeugen bekannt, wobei bei der Warnbremsung die erreichbare Fahrzeugverzögerung ermittelt wird und der Zeitpunkt der Einleitung der Notbremsung in Abhängigkeit von der ermittelten Fahrzeugverzögerung variiert wird.

Aus der DE 10 2005 054 754 A1 ist ein Verfahren zum Ermitteln des Zeitpunkts für die Einleitung eines notwendigen Bremseingriffs für ein Kraftfahrzeug bekannt. Die zu erwartende Bremsverzögerung wird derart ermittelt, dass bei Vorliegen eines aktuell ermittelten Reibwertes eine in Abhängigkeit von diesem Reibwert im Vergleich zu einer definierten Maximalverzögerung reduzierte Bremsverzögerung vorgegeben wird, während bei Nichtvorliegen eines aktuell ermittelten Reibwertes eine zur zuletzt vorgegebenen reduzierten Bremsverzögerung erhöhte Bremsverzögerung vorgegeben wird.

Aus der EP 2036791 A1 ist eine Verzögerungs-Kontrolleinrichtung für ein Fahrzeug bekannt, bei dem eine Warnbremseinrichtung bei Erfassen eines bestimmten Verzögerungswertes auch dann deaktiviert bleibt, wenn an sich eine Warnbremsung ausgelöst werden sollte.

Die Aufgabe der Erfindung besteht darin, ein Verfahren zur Ausführung eines Notbremsvorgangs eines Fahrzeugs weiter zu verbessern, insbesondere dahingehend, dass der Notbremsvorgang verfahrenstechnisch einfach der aktuellen Fahrsituation bzw. Umgebungssituation des Fahrzeugs angepasst wird.

Diese Aufgabe wird durch die Merkmale des Patentanspruchs 1 gelöst. Bevorzugte Weiterbildungen sind Gegenstände der Unteransprüche.

Gemäß Anspruch 1 ist ein Verfahren zur Ausführung eines Notbremsvorgangs eines Fahrzeugs, insbesondere eines Nutzfahrzeugs, zur Unfallvermeidung und/oder Unfallfolgenverminderung vorgesehen, wobei bei Erfassen und/oder Vorliegen zumindest einer vorgegebenen Warnbedingung ein Notbremsvorgang ausgelöst wird. Bei Auslösung des Notbremsvorgangs wird eine Fahrerwarnung ausgegeben und gleichzeitig oder zeitversetzt dazu eine definierte Notbremsverzögerung des Fahrzeugs auf Basis einer zeitlich vor und/oder während des Notbremsvorgangs bestimmten und auf den Notbremsvorgang bezogenen Einflussgröße vorgegeben und/oder gesteuert. Erfindungsgemäß werden bei Erreichen bzw. Erfüllen einer vorgegebenen Kaskaden-Bedingung, das heißt beim Überschreiten eines vorgegebenen Schwellenwertes der auf den Notbremsvorgang bezogenen Einflussgröße wenigstens zwei Notbremsverzögerungsphasen mit unterschiedlicher Notbremsverzögerung vorgeben. Vorteilhaft kann dadurch eine sogenannte Brems- oder Warnkaskade erreicht werden, wobei die Notbremsverzögerung bzw. Verzögerung bzw. der Notbremsverzögerungswert bzw. Verzögerungswert der Notbremsverzögerungsphasen bzw. Verzögerungsphasen und/oder die Dauer der Verzögerungsphasen durch die auf den Notbremsvorgang bezogene Einflussgröße bestimmt wird bzw. werden. Auf diese Weise kann der Notbremsvorgang steuerungstechnisch einfach an die Einflussgröße bzw. an eine Veränderung dieser Einflussgröße angepasst werden, zum Beispiel dergestalt, dass der Verzögerungswert einer zeitlich ersten Verzögerungsphase geringer ist als ein Verzögerungswert wenigstens einer zeitlich nachfolgenden Verzögerungsphase, insbesondere der Verzögerungswert einer zeitlich letzten Verzögerungsphase einem maximalen Verzögerungswert entspricht. Auf diese Weise kann ein optimal an die aktuelle Fahrzeug- bzw. Umgebungssituation angepasster Notbremsvorgang auf einfache Weise vorgegeben sowie ggf. auch adaptiert werden. Somit kann beim erfindungsgemäßen Notbremsvorgang sowohl der Führer des Fahrzeugs als auch das Fahrzeug selbst auf die jeweils aktuell vorherrschende bzw. ggf. eintretende Unfallsituation optimiert vorbereitet werden.

So kann zum Beispiel gemäß einer konkreten Verfahrensführung bei einem ausreichend hohen und damit eine Kaskaden-Bedingung erfüllenden bzw. erreichenden hohen Kraftschlussbeiwert als beispielhafte Einflussgröße zunächst eine geringe Verzögerung eingeleitet werden, bevor dann, bei in etwa gleich bleibendem Kraftschlussbeiwert, zu einem definierten Zeitpunkt eine demgegenüber höhere Verzögerung vorgegeben wird, was zum Beispiel sprunghaft erfolgt. Andererseits kann auch, wenn zum Beispiel während des Notbremsvorgangs ein solchermaßen geänderter Kraftschlussbeiwert ermittelt wird, dass sich eine akute Zunahme einer Gefahrensituation ergibt, die Verzögerung sofort, zum Beispiel sprunghaft, erhöht werden. Ein gezielt stufenweises Abbremsen des Fahrzeugs ist somit möglich. Der Fahrzeugführer bzw. das Fahrzeug kann damit optimal auf eine drohende Unfallsituation vorbereitet werden und entsprechend reagieren. Erfindungsgemäß wird bei Unterschreiten eines vorgegebenen Schwellwertes, der auf den Notbremsvorgang bezogenen Einflussgröße eine maximal verfügbare Notbremsverzögerung vorgegeben. Dadurch wird erreicht, dass bei einer besonders akuten Unfallgefahr sofort die maximal verfügbare Notbremsverzögerung vorgegeben wird. Konkret kann somit die Verfahrensführung derart ausgestaltet sein, dass beim Überschreiten eines definierten Schwellwertes der Einflussgröße eine stufenartige Notbremsverzögerung vorgegeben wird, während beim Unterschreiten dieses Schwellwerts die maximal verfügbare Notbremsverzögerung vorgegeben wird. Die Begrifflichkeit Überschreiten oder Unterschreiten in Verbindung mit den Schwellwerten ist hier ausdrücklich in einem weiten Sinne zu verstehen und soll lediglich zur Abgrenzung unterschiedlicher Notbremsverzögerungssituationen dienen. So können diese Begrifflichkeiten je nach Art des Schwellwertes auch umgekehrt Verwendung finden.
Besonders bevorzugt kann die auf den Notbremsvorgang bezogene Einflussgröße wiederholt während des Notbremsvorgangs ermittelt werden und die Notbremsverzögerung einer Veränderung der Einflussgröße angepasst und damit adaptiert werden. Somit wird eine dynamische Anpassung des Notbremsvorgangs auf eine Veränderung der Fahrzeug- bzw. Umgebungssituation ermöglicht.
In einer konkreten Ausgestaltung kann die Fahrerwarnung für den Fahrer optisch und/oder akustisch und/oder haptisch wahrnehmbar sein. Im Fall einer haptisch wahrnehmbaren Fahrerwarnung kann die Fahrerwarnung in Form eines Teilbremsvorgangs als Bremsruck erfolgen. Gerade ein Teilbremsvorgang als Bremsruck stellt eine schnell wahrnehmbare sowie technisch einfach umsetzbare Fahrerwarnung dar. Besonders bevorzugt im Sinne einer vorteilhaften Funktionsintegration ist in diesem Zusammenhang eine Ausführung, bei der die auf den Notbremsvorgang bezogene Einflussgröße von der den Teilbremsvorgang durchführenden Baueinheit geliefert oder abgeleitet wird.

In einer konkreten Ausführungsform kann der Teilbremsvorgang durch Betätigung einer Betriebsbremsanlage (auch ECE genannt) umgesetzt werden, insbesondere dergestalt, dass die Betriebsbremsanlage kurzzeitig verzögert. Alternativ oder zusätzlich kann der Teilbremsvorgang analog auch durch Betätigung einer Dauerbremsanlage als verschleißfreie Bremsanlage umgesetzt werden, insbesondere dergestalt, dass die Dauerbremsanlage kurzzeitig verzögert.

Die auf den Notbremsvorgang bezogene Einflussgröße kann grundsätzlich durch jeden geeigneten Wert bzw. Parameter gebildet sein, der am Fahrzeug erfasst und/oder gemessen werden kann. Besonders bevorzugt ist die auf den Notbremsvorgang bezogene Einflussgröße jedoch durch einen Kraftschlussbeiwert gebildet. Der Kraftschlussbeiwert ist unter anderem abhängig von den Witterungsbedingungen, der Beschaffenheit der Fahrbahnoberfläche sowie dem Zustand der Reifen. Somit kann durch eine Berücksichtigung des Kraftschlussbeiwerts beim Ansteuern bzw. Vorgeben der Notbremsverzögerung der Notbremsvorgang optimiert und den Fahrbedingungen bzw. Umgebungsbedingungen angepasst werden. Bei einem kleineren Kraftschlussbeiwert ist die maximal mögliche Verzögerung geringer. Durch eine Bestimmung des Kraftschlussbeiwerts während der Dauer der Fahrerwarnung kann der Notbremsvorgang somit optimal der vorliegenden maximal möglichen Verzögerung angepasst werden.

In einer konkreten Ausgestaltung wird der Kraftschlussbeiwert rechnerisch auf der Basis sensorisch erfasster Parameter ermittelt, insbesondere mittels ohnehin bereits im Fahrzeug verbauter Systeme. Bevorzugt kann der Kraftschlussbeiwert mittels eines elektronischen Bremssystems ermittelt werden. Auf diese Weise kann der als Bremsruck ausgeführte Teilbremsvorgang zum einen als Fahrerwarnung dienen und zum anderen zur Ermittlung des Kraftschlussbeiwerts genutzt werden. Durch diese vorteilhafte Doppelfunktion des als Bremsruck ausgeführten Teilbremsvorgangs kann der Notbremsvorgang technisch einfach der aktuellen Fahrzeugumgebung, wie zum Beispiel Witterungsbedingungen, Beschaffenheit der Fahrbahnoberflächen bzw. der Reifen, angepasst werden.

Alternativ dazu kann die Einflussgröße aber grundsätzlich auch ein auf Basis einer Kraft-Schlupf-Kennung ermittelter Wert sein, zum Beispiel ein mittels einer Antischlupfregelung ermittelter Wert, um nur ein Beispiel zu nennen.

Nachfolgend ist ein Ausführungsbeispiel anhand der Figuren beschrieben.

Es zeigen:

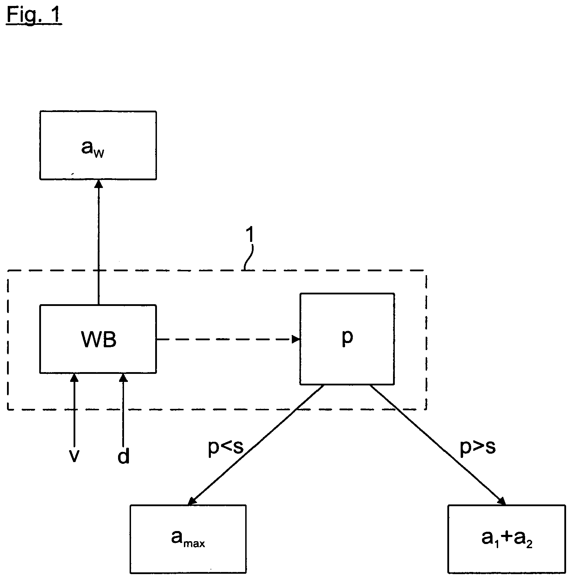

- Fig. 1: ein Blockdiagramm eines Ablaufs des erfindungsgemäßen Verfahrens zur Ausführung eines Notbremsvorgangs und
- Fig, 2: ein Verzögerung-Zeit-Diagramm des Ablaufs der Notbremsverzögerung als Funktion der Zeit.

In der Fig. 1 ist der prinzipielle Ablauf des Verfahrens zur Ausführung des Notbremsvorgangs gezeigt. Wie aus der Fig. 1 hervorgeht, wird beim Vorliegen einer Warnbedingung WB von einer hier strichliert eingezeichneten Steuer- und/oder Regeleinrichtung 1 eines Fahrzeugs eine Fahrerwarnung a_{w} ausgelöst. Das Vorliegen der Warnbedingung WB kann von der Steuer- und/oder Regeleinrichtung 1 beispielsweise aus der Geschwindigkeit v und Beschleunigung des Notbremsfahrzeugs, sowie dem Abstand d zum vorausfahrenden Fahrzeug, dessen Geschwindigkeit und Beschleunigung ermittelt werden (beispielhaft durch Pfeile angedeutet). Die Fahrerwarnung a_{w} erfolgt anhand eines haptisch wahrnehmbaren Teilbremsvorgangs, auch als Bremsruck bezeichnet. Der Bremsruck a_{w} kann zum Beispiel durch ein kurzzeitiges Verzögern einer Betriebs- bzw. Reibungsbremsanlage und/oder einer Dauerbremsanlage umgesetzt werden.

Wie aus der Fig. 1 weiter hervorgeht, wird zum Beispiel während der Dauer des Bremsrucks a_{w} (dargestellt durch den strichlierten Pfeil) von der Steuer- und/oder Regeleinrichtung 1 eine auf den Notbremsvorgang bezogene Einflussgröße p bestimmt oder zum Beispiel im Falle einer vor dem Einleiten des Notbremsvorgangs erfassten Einflussgröße diese gegebenenfalls adaptiert. Bei der Einflussgröße p handelt es sich bevorzugt um einen Kraftschlussbeiwert, welcher durch ein elektronisches Bremssystem anhand eines Radschlupfes ermittelt wird. Ist der Kraftschlussbeiwert p kleiner als ein vordefinierter Schwellenwert s, so wird vom Notbremssystem sofort eine maximal mögliche Verzögerung aₘₐₓ vorgegeben. Ist der Kraftschlussbeiwert p dagegen größer als der Schwellenwert s, so wird eine vom Notbremssystem erste Notbremsverzögerung a₁ gefolgt von einer zweiten, vorzugsweise maximalen Notbremsverzögerung a₂ vorgegeben.

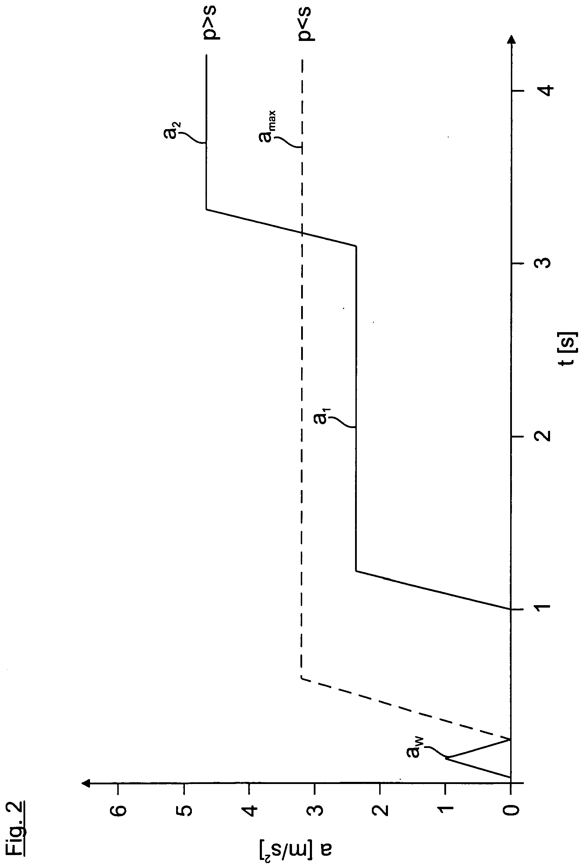

Die Fig. 2 zeigt den Verlauf der Verzögerung während des Notbremsvorgangs als Funktion der Zeit. Wie aus der Fig. 2 hervorgeht, erfolgt zunächst eine kurzzeitige geringe Verzögerung, bei der es sich um die Fahrerwarnung als Bremsruck a_{w} handelt. Wie zuvor bereits beschrieben, wird während des Bremsrucks a_{w} der Kraftschlussbeiwert p bestimmt. Für den Fall, dass dieser zeitlich vor Einleiten des Notbremsvorgangs erfasst wurde, kann der Kraftschlussbeiwert gegebenenfalls adaptiert werden. Ist der Kraftschlussbeiwert p kleiner als der Schwellenwert s so wird direkt nach dem Bremsruck a_{W} die dann maximal verfügbare Notbremsverzögerung aₘₐₓ vorgegeben (siehe gestrichelte Linie). Ist der ermittelte Kraftschlussbeiwert p jedoch größer als der Schwellenwert s, so wird in einer ersten Notbremsverzögerungsphase eine Notbremsverzögerung a₁ vorgegeben, welche von einer zweiten Notbremsverzögerungsphase mit einer Notbremsverzögerung a₂ gefolgt wird.

Gemäß der Fig. 2 ist die Notbremsverzögerung a₁ der ersten Notbremsverzögerungsphase kleiner als die Notbremsverzögerung a₂ der zweiten Notbremsverzögerungsphase. Somit ergibt sich ein stufenartiger Verlauf der Notbremsverzögerung a (siehe durchgezogene Linie). Die erste Notbremsverzögerungsphase kann beispielsweise als weitere Warnung für den Fahrer des Notbremsfahrzeugs bzw. den Fahrern nachfolgender Fahrzeuge dienen.

## Patentansprüche

1. Verfahren zur Ausführung eines Notbremsvorgangs eines Fahrzeugs, insbesondere Nutzfahrzeugs, zur Unfallvermeidung und/oder Unfallfolgenverminderung, wobei bei Erfassen und/oder Vorliegen zumindest einer vorgegebenen Warnbedingung (WB) ein Notbremsvorgang ausgelöst wird, dergestalt, dass bei Auslösung des Notbremsvorgangs eine Fahrerwarnung (a_{w}) ausgegeben wird und gleichzeitig oder zeitversetzt dazu eine definierte Notbremsverzögerung des Fahrzeugs auf Basis einer zeitlich vor und/oder während des Notbremsvorgangs bestimmten und auf den Notbremsvorgang bezogenen Einflussgröße (p) gesteuert wird **dadurch gekennzeichnet, dass** beim Überschreiten eines vorgegebenen Schwellenwertes (s) der auf den Notbremsvorgang bezogenen Einflussgröße (p) wenigstens zwei Notbremsverzögerungsphasen mit unterschiedlichen Notbremsverzögerungswerten (a₁, a₂) vorgegeben und ausgeführt werden, wobei der Verzögerungswert (a₁, a₂) der Verzögerungsphasen und/oder die Dauer der Verzögerungsphasen durch die auf den Notbremsvorgang bezogene Einflussgröße (p) bestimmt wird, und dass beim Unterschreiten des vorgegebenen Schwellenwertes (s) der auf den Notbremsvorgang bezogenen Einflussgröße (p) eine maximal umsetzbare Notbremsverzögerung (aₘₐₓ) vorgegeben wird.

2. Verfahren nach Anspruch 1, **dadurch gekennzeichnet, dass** der Verzögerungswert einer zeitlich ersten Verzögerungsphase (a₁) geringer ist als ein Verzögerungswert wenigstens einer zeitlich nachfolgenden Verzögerungsphase (a₂), insbesondere der Verzögerungswert einer zeitlich letzten Verzögerungsphase (a₂) einem maximalen Verzögerungswert entspricht.

3. Verfahren nach einem der vorhergehenden Ansprüche, **dadurch gekennzeichnet, dass** die auf den Notbremsvorgang bezogene Einflussgröße (p) wiederholt während des Notbremsvorgangs ermittelt wird und die Notbremsverzögerung (a) einer Veränderung der Einflussgröße (p) angepasst wird.

4. Verfahren nach einem der vorhergehenden Ansprüche, **dadurch gekennzeichnet, dass** die Fahrerwarnung (a_{W}) für den Fahrer optisch und/oder akustisch und/oder haptisch wahrnehmbar ist.

5. Verfahren nach Anspruch 4, **dadurch gekennzeichnet, dass** eine haptisch für den Fahrer wahrnehmbare Fahrerwarnung (a_{W}) in Form eines Teilbremsvorgangs als Bremsruck erfolgt.

6. Verfahren nach Anspruch 5, **dadurch gekennzeichnet, dass** der Teilbremsvorgang (a_{W}) durch Betätigung einer Betriebs- und/oder Reibungsbremsanlage oder durch Betätigung einer Dauerbremsanlage umgesetzt wird.

7. Verfahren nach Anspruch 4 oder 5, **dadurch gekennzeichnet, dass** die auf den Notbremsvorgang bezogene Einflussgröße (p) von der den Teilbremsvorgang durchführenden Baueinheit geliefert oder abgeleitet wird.

8. Verfahren nach einem der vorhergehenden Ansprüche, **dadurch gekennzeichnet, dass** die auf den Notbremsvorgang bezogene Einflussgröße (p) einen Kraftschlussbeiwert umfasst oder ein auf Basis einer Kraft-Schlupf-Kennung ermittelter Wert ist.

9. Verfahren nach Anspruch 8, **dadurch gekennzeichnet, dass** der Kraftschlussbeiwert (p) rechnerisch auf der Basis sensorisch erfasster Parameter ermittelt wird.

10. Verfahren nach Anspruch 8, **dadurch gekennzeichnet, dass** der Kraftschlussbeiwert (p) mittels eines elektronischen Bremssystems ermittelt wird oder dass der Kraftschlussbeiwert (p) anhand eines Radschlupfes, insbesondere mittels einer Antischlupfregelung, ermittelt wird.

## Claims

1. Method for executing an emergency braking procedure of a vehicle, in particular utility vehicle, in order to avoid an accident and/or reduce the consequences of an accident, wherein when at least one predefined warning condition (WB) is detected and/or is present, an emergency braking procedure is triggered in such a way that when the emergency braking procedure is triggered a driver warning (a_{w}) is output and at the same time, or in a chronologically offset fashion with respect thereto, a defined emergency braking deceleration of the vehicle is controlled on the basis of an influencing variable (p) which is determined chronologically before and/or during the emergency braking procedure and is related to the emergency braking procedure, **characterized in that** when a predefined threshold value (s) of the influencing variable (p) related to the emergency braking procedure is exceeded, at least two emergency braking deceleration phases with different emergency braking deceleration values (a₁, a₂) are predefined and executed, wherein the deceleration value (a₁, a₂) of the deceleration phases and/or the duration of the deceleration phases are/is determined by the influencing variable (p) related to the emergency braking procedure, and **in that** when the predefined threshold value (s) of the influencing variable (p) related to the emergency braking procedure is undershot, a maximum implementable emergency braking deceleration (aₘₐₓ) is predefined.

2. Method according to Claim 1, **characterized in that** the deceleration value of a chronological first deceleration phase (a₁) is shorter than a deceleration value of at least one chronologically subsequent deceleration phase (a₂), in particular the deceleration value of a chronologically last deceleration phase (a₂) corresponds to a maximum deceleration value.

3. Method according to one of the preceding claims, **characterized in that** the influencing variable (p) related to the emergency braking procedure is determined repeatedly during the emergency braking procedure, and the emergency braking deceleration (a) is adapted to a change in the influencing variable (p).

4. Method according to one of the preceding claims, **characterized in that** driver warning (a_{w}) for the driver can be perceived visually and/or acoustically and/or haptically.

5. Method according to Claim 4, **characterized in that** a driver warning (a_{w}) which can be perceived haptically by the driver is implemented in the form of a partial braking process as a braking jolt.

6. Method according to Claim 5, **characterized in that** the partial braking procedure (a_{w}) is implemented by activating a service brake system and/or friction brake system or by actuating a retarder system.

7. Method according to Claim 4 or 5, **characterized in that** the influencing variable (p) related to the emergency braking procedure is supplied or derived from the structural unit which carries out the emergency braking procedure.

8. Method according to one of the preceding claims, **characterized in that** the influencing variable (p) related to the emergency braking procedure comprises a coefficient of friction or a value which is determined on the basis of a force/slip characteristic curve.

9. Method according to Claim 8, **characterized in that** the coefficient of friction (p) is determined computationally on the basis of parameters which are detected by sensor.

10. Method according to Claim 8, **characterized in that** the coefficient of friction (p) is determined by means of an electronic brake system, or **in that** the coefficient of friction (p) is determined on the basis of a wheel slip, in particular by means of a traction control system.

## Revendications

1. Procédé d'exécution d'une opération de freinage d'urgence d'un véhicule, en particulier d'un véhicule utilitaire, dans le but de prévenir des accidents et/ou de réduire les conséquences d'un accident, dans lequel une opération de freinage d'urgence est déclenchée lorsqu'au moins une condition d'avertissement (WB) prédéterminée est détectée et/ou présente, de manière à ce que, lorsque l'opération de freinage d'urgence est déclenchée, un avertissement du conducteur (a_{w}) soit délivré et, en même temps ou avec un décalage dans le temps, qu'un retard de freinage d'urgence défini du véhicule soit commandé sur la base d'une grandeur d'influence (p) liée à l'opération de freinage d'urgence déterminée temporellement avant et/ou pendant l'opération de freinage d'urgence, **caractérisé en ce que**, en cas de dépassement d'une ou plusieurs valeurs de seuil prédéterminées de la grandeur d'influence (p) liée à l'opération de freinage d'urgence, au moins deux phases de retard de freinage d'urgence avec différentes valeurs de retard de freinage d'urgence (a₁, a₂) sont prédéterminées et exécutées, dans lequel la valeur de retard de freinage (a₁, a₂) des phases de retard et/ou la durée des phases de retard est/sont déterminée(s) par la grandeur d'influence (p) liée à l'opération de freinage d'urgence, et **en ce qu'**un retard de freinage d'urgence maximal réalisable (aₘₐₓ) est prédéterminé lorsque la grandeur d'influence (p) liée au freinage d'urgence est inférieure à la valeur de seuil ou aux valeurs de seuil prédéfinie(s).

2. Procédé selon la revendication 1, **caractérisé en ce que** la valeur de retard d'une première phase de retard (a₁) est inférieure à une valeur de retard d'au moins une phase de retard (a₂) consécutive dans le temps, en particulier **en ce que** la valeur de retard d'une dernière phase de retard (a₂) dans le temps correspond à une valeur de retard maximale.

3. Procédé selon l'une des revendications précédentes, **caractérisé en ce que** la grandeur d'influence (p) liée à l'opération de freinage d'urgence est déterminée à plusieurs reprises pendant l'opération de freinage d'urgence et **en ce que** le retard de freinage d'urgence (a) est adapté à une modification de la grandeur d'influence (p).

4. Procédé selon l'une des revendications précédentes, **caractérisé en ce que** l'avertissement du conducteur (a_{w}) est perceptible par le conducteur visuellement et/ou acoustiquement et/ou haptiquement.

5. Procédé selon la revendication 4, **caractérisé en ce qu'**un avertissement du conducteur (a_{w}), qui peut être perçu haptiquement par le conducteur, est produit sous la forme d'une opération de freinage partielle telle qu'un coup de frein.

6. Procédé selon la revendication 5, **caractérisé en ce que** l'opération de freinage partielle (a_{w}) est réalisée par actionnement d'un système de freinage de service et/ou à friction ou par actionnement d'un système de freinage continu.

7. Procédé selon la revendication 4 ou 5, **caractérisé en ce que** la grandeur d'influence (p) liée à l'opération de freinage d'urgence est fournie ou déduite par le module effectuant l'opération de freinage partielle.

8. Procédé selon l'une des revendications précédentes, **caractérisé en ce que** la grandeur d'influence (p) liée à l'opération de freinage d'urgence comprend un coefficient d'adhérence ou est une valeur déterminée sur la base d'une caractéristique force-glissement.

9. Procédé selon la revendication 8, **caractérisé en ce que** le coefficient d'adhérence (p) est déterminé mathématiquement sur la base de paramètres détectés par des capteurs.

10. Procédé selon la revendication 8, **caractérisé en ce que** le coefficient d'adhérence (p) est déterminé au moyen d'un système de freinage électronique ou **en ce que** le coefficient d'adhérence (p) est déterminé sur la base d'un patinage de roue, notamment au moyen d'une commande d'antidérapage.
